# EUROPÄISCHE PATENTSCHRIFT

(11) **EP 2 979 543 B1**
(45) Veröffentlichungstag und Bekanntmachung des Hinweises auf die Patenterteilung: **01.03.2017**
(21) Anmeldenummer: 15177334.8
(22) Anmeldetag: 17.07.2015
(51) Int. Cl.: A01K 5/02

(54) **FLÜSSIGFÜTTERUNGSANLAGE FÜR NUTZTIERE**
LIQUID FEED DISPENSING SYSTEM FOR LIVESTOCK
INSTALLATION D'ALIMENTATION LIQUIDE POUR BETAIL

(30) Priorität: 30.07.2014 DE 202014006076 U
(43) Veröffentlichungstag der Anmeldung: 03.02.2016
(73) Patentinhaber: Big Dutchman International GmbH, 49377 Vechta-Calveslage (DE)
(72) Erfinder: RAUSCH, Matthias, 27578 Bremerhaven (DE)
(74) Vertreter: Eisenführ Speiser

(56) Entgegenhaltungen:
- EP-A1- 0 491 312
- EP-A1- 0 519 114
- US-B1- 6 199 512

## Beschreibung

Die Erfindung betrifft eine Flüssigfütterungsanlage für Nutztiere sowie eine Steuerungsvorrichtung hierfür. Ferner betrifft die Erfindung ein Verfahren zur Flüssigfütterung von Nutztieren.

Die Flüssigfütterung spielt in der modernen Nutztierhaltung, insbesondere in der Schweinehaltung, eine immer wichtigere Rolle. In Flüssigfütterungsanlagen können Gemische aus festen und/oder pastösen Futterkomponenten mit einer flüssigen Futterkomponenten, insbesondere Wasser, als Flüssigkeits-Feststoff-Gemische oder Pasten verfüttert werden, oder es kann eine reine Flüssigkeitsfütterung aus flüssigen Futterkomponenten erfolgen.

In der Regel wird dabei mindestens eine Futterkomponente in einem Mischtank bereitgestellt. Wenn es sich um eine flüssige Futterkomponente handelt, kann dies bereits die einzige Komponente des Flüssigfutters sein. In einem Mischtank können jedoch auch mehrere Futterkomponenten bereitgestellt und vorzugsweise gemischt werden, die jeweils flüssig, pastös oder fest sein können, wie beispielsweise Molke, Schlempen oder Getreideschrot. Insbesondere können als Futterkomponenten beispielsweise feste, insbesondere pulverförmige oder granulatförmige, breiige oder pastöse Futterkomponenten verwendet werden. Dazu ist im Mischtank in der Regel ein Rührwerk vorgesehen, welches die Futterkomponenten vermischt. In der Regel wird auch mindestens eine flüssige Futterkomponente zugegeben. Wasser als flüssige Futterkomponente wird meist aus einem Frischwasserreservoir zugeführt, während andere, insbesondere nicht flüssige Futterkomponenten, meist aus anderen Futterkomponentenreservoirs zugegeben werden. Insbesondere die Zufuhr von Wasser als Futterkomponente kann ebenfalls im Mischtank erfolgen oder in eine an den Mischtank angeschlossene Flüssigfutterleitung. Ein Frischwasserreservoir kann dazu beispielsweise mit der Flüssigfutterleitung und/oder mit dem Mischtank verbunden sein.

Flüssigfütterungsanlagen sind beispielsweise aus der DE 20 2010 007 723 U1, der DE 4206728 A1, der DE 19954640 C1 oder der deutschen Gebrauchsmusteranmeldung der Anmelderin DE 20 2013 003 972.8 oder der deutschen Patentanmeldung der Anmelderin DE 10 2014 006 001.2 bekannt.

EP0491312-A1 beschreibt eine Flüssigfütterungsanlage für Nutztiere, umfassend - einen ersten Mischtank zum Anmischen von Flüssigfutter mit einem ersten Flüssigfutterausgang für angemischtes Flüssigfutter, - einen zweiten Mischtank zum Anmischen von Futterkomponenten mit einem zweiten Flüssigfutterausgang für angemischtes Flüssigfutter, - wobei der erste Mischtank ein erstes Minimal-Anmischvolumen aufweist und der zweite Mischtank ein zweites Minimal-Anmischvolumen aufweist, und - eine Steuereinheit, die angeordnet und ausgebildet ist, in einer ersten Betriebsvariante die Flüssigfütterungsanlage anzusteuern, um in dem ersten Mischtank Flüssigfutter anzumischen, das Flüssigfutter über den ersten Flüssigfutterausgang des ersten Mischtanks in eine Flüssigfutterleitung auszugeben, das Flüssigfutter durch die Flüssigfutterleitung zu fördern.

Die in der Flüssigfütterung zum Einsatz kommenden Futterkomponenten sowie deren Zusammensetzungen (Rezepturen) können sich in der Praxis nahezu täglich ändern. Ferner variiert in der Praxis häufig die in einem Fütterungsvorgang einzusetzende Flüssigfuttermenge. Beispielsweise ist die im Mischtank anzumischende und über die Flüssigfütterungsanlage bereitzustellende Flüssigfuttermenge für eine bestimmte Anzahl an Sauen deutlich größer als eine anzumischende und bereitzustellende Flüssigfuttermenge für die gleiche Anzahl von Ferkeln. Zudem unterscheiden sich die Rezepturen des Flüssigfutters. Diese Variabilität führt dazu, dass Flüssigfütterungsanlagen relativ komplex sind und eine Vielzahl von Komponenten erfordern, um diese Variabilität in der Flüssigfutterbereitstellung abbilden zu können.

Es ist daher eine Aufgabe der vorliegenden Erfindung, eine Flüssigfütterungsanlage und eine Steuerungsvorrichtung hierfür sowie ein Verfahren zur Flüssigfütterung anzugeben, welche einen oder mehrere der genannten Nachteile verringern oder beseitigen. Insbesondere ist es eine Aufgabe der vorliegenden Erfindung, eine Flüssigfütterungsanlage und eine Steuerungsvorrichtung hierfür sowie ein Verfahren zur Flüssigfütterung anzugeben, welche die Variabilität und/oder Flexibilität in der Flüssigfutterbereitstellung verbessert und/oder erleichtert. Ferner ist es eine Aufgabe der vorliegenden Erfindung, eine Flüssigfütterungsanlage und eine Steuerungsvorrichtung hierfür sowie ein Verfahren zur Flüssigfütterung anzugeben, welche besonders kostengünstig ist.

Diese Aufgabe wird gelöst durch eine Flüssigfütterungsanlage für Nutztiere, umfassend einen ersten Mischtank zum Anmischen von Flüssigfutter mit einem ersten Flüssigfutterausgang für angemischtes Flüssigfutter, einen zweiten Mischtank zum Anmischen von Futterkomponenten mit einem zweiten Flüssigfutterausgang für angemischtes Flüssigfutter, wobei der erste Mischtank ein erstes Minimal-Anmischvolumen aufweist und der zweite Mischtank ein zweites Minimal-Anmischvolumen aufweist, und vorzugsweise das zweite Minimal-Anmischvolumen größer ist als das erste Minimal-Anmischvolumen; und eine Steuereinheit, die angeordnet und ausgebildet ist, in einer ersten Betriebsvariante die Flüssigfütterungsanlage anzusteuern, um in dem ersten Mischtank Flüssigfutter, vorzugsweise eine vorbestimmte erste Menge Flüssigfutter, anzumischen, das Flüssigfutter über den ersten Flüssigfutterausgang des ersten Mischtanks in eine Flüssigfutterleitung, insbesondere eine Ringflüssigfutterleitung, auszugeben, das Flüssigfutter durch die Flüssigfutterleitung zu fördern, in der Flüssigfutterleitung befindliches Transportmedium in den zweiten Mischtank zu fördern, und Transportmedium über den zweiten Flüssigfutterausgang des zweiten Mischtanks in die Flüssigfutterleitung auszugeben, wenn eine vorbestimmte Menge, vorzugsweise die vorbestimmte erste Menge, Flüssigfutter aus dem ersten Mischtank in die Flüssigfutterleitung ausgegeben wurde.

Die erfindungsgemäße Flüssigfütterungsanlage sieht zwei Mischtanks zum Anmischen von Flüssigfutter vor. Die Mischtanks können gleich oder unterschiedlich ausgebildet sein, bevorzugt ist eine Ausbildung in unterschiedlicher Größe.

Ein Mischtank kann in seinem unteren Bereich eine trichterförmig zulaufende Form haben, sodass das darin angemischte Flüssigfutter, meist durch Schwerkraft getrieben, aus einem vorzugsweise im unteren Bereich angeordneten Flüssigfutterausgang austreten kann. Der Flüssigfutterausgang ist in der Regel mit einer Flüssigfutterleitung verbunden, sodass das Flüssigfutter aus dem Mischtank durch den Flüssigfutterausgang in die Flüssigfutterleitung gelangt. Die Flüssigfutterleitung dient in der Regel dazu, das Flüssigfutter an mindestens eine Abgabestelle, an der das Flüssigfutter an Nutztiere bereitgestellt wird, abzugeben. Die Flüssigfutterleitung kann sich, gegebenenfalls mehrfach, verzweigern und ganz oder in Teilabschnitten als Ring- oder Stichleitung ausgebildet sein. Die Flüssigfutterleitung kann beispielsweise als Rohr ausgebildet sein. Die Flüssigfutterleitung erstreckt sich vorzugsweise zwischen dem Mischtank als Ausgangspunkt bis zu einer oder mehreren, vorzugsweise einer Vielzahl von Abgabestellen, welche die Endpunkte der, meist verzweigte, Flüssigfutterleitung, darstellen. In einer Ringflüssigfutterleitung zweigen die Abgabestellen in der Regel von einer geschlossenen Ringleitung ab. Zur Förderung des Flüssigfutters in der Flüssigfutterleitung entlang einer Förderrichtung ist in der Regel mindestens eine Fördervorrichtung, meist eine Pumpe, vorgesehen. Die Förderrichtung entspricht vorzugsweise im Wesentlichen der Längsachse der Flüssigfutterleitung, wobei bei entsprechender Richtungsänderung bzw. Verzweigung der Flüssigfutterleitung auch die Förderrichtung entsprechend ihre Richtung ändert. Grundsätzlich verläuft die Förderrichtung entlang der Flüssigfutterleitung vom Mischtank zu den Abgabestellen, und bei einer Ringflüssigfutterleitung wieder zurück zum Mischtank.

Als Fördervorrichtung zum Fördern des Flüssigfutters und/oder des Transportmediums in der Flüssigfutterleitung wird vorzugsweise mindestens eine Pumpe eingesetzt. Als Pumpe können beispielsweise Kreisel- oder Schneckenverdrängerpumpen, oft frequenzgesteuert, zum Einsatz kommen. Die Dimensionierung der Fördervorrichtung wird meist in Abhängigkeit vom Fütterungsverfahren, von der Länge der Flüssigfutterleitungen und der Konsistenz des Flüssigfutters gewählt. Als Fördervorrichtung kann auch eine Mischpumpe zum Einsatz kommen, die eine Misch- und Pumpwirkung kombiniert, beispielsweise eine Scherpumpe.

Die Abgabestellen sind meist als Ende eines, meist vertikal verlaufenden, letzten Abschnitts der Flüssigfutterleitung ausgeführt. Diese letzten Abschnitte der Flüssigfutterleitung sind mit der übrigen Flüssigfutterleitung vorzugsweise durch Ventile verbunden, sodass der Weg des Flüssigfutters durch die Flüssigfutterleitung gesteuert werden kann und einzelne Abgabestellen oder Gruppen von Abgabestellen gezielt angesteuert und geöffnet bzw. gesperrt werden können. Unterhalb der Abgabestellen sind in der Regel Futtertröge angeordnet, die mit aus den Abgabestellen austretendem Flüssigfutter befüllt werden.

In der Regel ist vor einem Futtervorgang die Flüssigfutterleitung mit einem Transport- und/oder Reinigungsmedium, insbesondere Wasser, gefüllt. Wenn angemischtes Flüssigfutter vom Mischtank zu den Abgabestellen gefördert wird, wird in der Regel das in der Flüssigfutterleitung befindliche Transportmedium oder Brauchwasser verdrängt. Am Ende des Fütterungsvorgangs wird das restliche Flüssigfutter nicht mehr durch zusätzliches Flüssigfutter in der Flüssigfutterleitung weitergefördert, sondern durch Fördern von weiterem Transportmedium, insbesondere Brauchwasser, im Anschluss an das Flüssigfutter. Wenn auf diese Weise das gesamte Flüssigfutter über die Abgabestellen abgegeben ist, ist die Flüssigfutterleitung vorzugsweise wieder nur durch das Transportmedium gefüllt. Diese Art der Fütterung kann auch als Restlosfütterung bezeichnet werden, da vorzugsweise das angemischte Flüssigfutter vollständig auf die Abgabestellen verteilt wird und nach einem Fütterungsvorgang kein Flüssigfutter in der Flüssigfutterleitung verbleibt. Als Brauchwasser wird in der Regel solches Wasser bezeichnet, welches als Frischwasser bereitgestellt wurde und welches bereits einen Mischtank und/oder zumindest einen Abschnitt einer Flüssigfutterleitung durchlaufen hat.

Die erfindungsgemäße Flüssigfütterungsanlage sieht zwei Mischtanks zum Anmischen von Flüssigfutter vor. Insbesondere um eine Restlosfütterung umzusetzen, bei der ein Transportmedium wie Brauchwasser eingesetzt wird, um am Ende der Bereitstellung des Flüssigfutters das letzte Flüssigfutter durch die Flüssigfutterleitung zu transportieren bzw. zu fördern, wird zudem ein Reservoir für dieses Transportmedium benötigt, in der Regel ein Brauchwassertank. Nachdem das im ersten oder zweiten Mischtank angemischte Flüssigfutter vollständig über den Flüssigfutterausgang des jeweiligen Mischtanks an die Flüssigfutterleitung abgegeben wurde, wird dann in der Regel Brauchwasser aus dem Brauchwasserreservoir in die Flüssigfutterleitung ausgegeben, damit ein Transportmedium zur weiteren Förderung des Flüssigfutters vorhanden ist. In der erfindungsgemäßen Flüssigfütterungsanlage kann nun auf diesen Brauchwassertank verzichtet werden. Hintergrund ist, dass die Steuereinheit der erfindungsgemäßen Flüssigfütterungsanlage angeordnet und ausgebildet ist, den zweiten Mischtank als Transportmediumreservoir, insbesondere als Brauchwassertank, zu nutzen, wenn der erste Mischtank zum Anmischen von Flüssigfutter genutzt wird.

Die beiden Mischtanks unterscheiden sich vorzugsweise in der Größe ihrer Minimal- Anmischvolumina: Der zweite Mischtank hat vorzugsweise ein größeres Minimal- Anmischvolumen als der erste Mischtank. Das Minimal-Anmischvolumen von Mischtanks hängt in der Regel von der Form des Mischtanks und der Positionierung und Gestaltung des Rührwerks im Mischtank ab. Wenn mit einer Flüssigfütterungsanlage beispielsweise einerseits kleinere Mengen Ferkelfutter bereitgestellt werden sollen und andererseits große Mengen Sauenfutter bereitgestellt werden sollen, kann es sinnvoll sein, zwei unterschiedlich große Mischtanks vorzusehen, deren Minimal-Anmischvolumina auf die jeweils erforderlichen Futtermengen abgestimmt sind.

Diese erste Betriebsvariante der Flüssigfütterungsanlage ist insbesondere bevorzugt, wenn nur eine geringe Menge an Flüssigfutter anzumischen und bereitzustellen ist, beispielsweise in der Ferkelfütterung. Hierfür wird dann der erste Mischtank mit dem vorzugsweise kleineren Minimal-Anmischvolumen genutzt und das darin angemischte Fertigfutter über die Flüssigfutterleitung, insbesondere eine Ringflüssigfutterleitung, zu den Ausgabestellen gefördert. Um auch den Rest des angemischten Flüssigfutters durch die Flüssigfutterleitung fördern zu können, wird ein Transportmedium, insbesondere Brauchwasser, aus dem zweiten Mischtank in die Flüssigfutterleitung ausgegeben. Das vor dem Beginn der Förderung des angemischten Flüssigfutters in der Flüssigfutterleitung befindliche Transportmedium wird dabei in den zweiten Mischtank gefördert, sodass das Transportmedium dort wieder zur Abgabe in die Flüssigfutterleitung zur Verfügung steht. Auf diese Weise ist es möglich, auf ein separates Transportmediumreservoir und den damit verbundenen Investitionsaufwand, Platzbedarf sowie Reinigungs- und Wartungsaufwand zu verzichten.

In einer bevorzugten Weiterbildung der Flüssigfütterungsanlage ist vorgesehen, dass die Steuereinheit angeordnet und ausgebildet ist, in einer zweiten Betriebsvariante die Flüssigfütterungsanlage anzusteuern, um in dem zweiten Mischtank Flüssigfutter, vorzugsweise eine vorbestimmte zweite Menge Flüssigfutter, anzumischen, das Flüssigfutter über den zweiten Flüssigfutterausgang des zweiten Mischtanks in die Flüssigfutterleitung auszugeben, das Flüssigfutter durch die Flüssigfutterleitung zu fördern, in der Flüssigfutterleitung befindliches Transportmedium in den ersten Mischtank zu fördern, und Transportmedium über den ersten Flüssigfutterausgang des ersten Mischtanks in die Flüssigfutterleitung auszugeben, wenn eine vorbestimmte Menge, vorzugsweise die vorbestimmte zweite Menge, Flüssigfutter aus dem zweiten Mischtank in die Flüssigfutterleitung ausgegeben wurde.

In dieser Fortbildung ist vorgesehen, dass die Steuereinheit die Flüssigfütterungsanlage auch in einer zweiten Betriebsvariante steuern kann, die eine umgekehrte Nutzung der beiden Mischtanks im Vergleich zur ersten Betriebsvariante vorsieht. In der zweiten Betriebsvariante wird Flüssigfutter im zweiten, vorzugswese größeren, Mischtank angemischt und in der Flüssigfutterleitung befindliches Transportmedium, insbesondere Brauchwasser, in den ersten Mischtank befördert, sodass in dieser zweiten Betriebsvariante der erste Mischtank als Transportmediumreservoir oder Brauchwassertank dient. Wenn das angemischte Flüssigfutter vom zweiten Mischtank an die Flüssigfutterleitung ausgegeben wurde, wird dann Transportmedium aus dem ersten Mischtank in die Flüssigfutterleitung abgegeben, um auch den Rest des angemischten Flüssigfutters durch die Flüssigfutterleitung zu den Abgabestellen fördern zu können.

Auf diese Weise ist es möglich, auf ein separates Transportmediumreservoir zu verzichten unabhängig davon, ob eine kleine oder eine große Menge von Flüssigfutter angemischt werden soll, das heißt insbesondere unabhängig davon, ob der erste oder der zweite Mischtank als Mischtank zum Anmischen von Futterkomponenten genutzt werden soll. Die Flüssigfütterungsanlage ist somit vorzugsweise ausgebildet, immer einen der beiden Tanks als Mischtank zum Anmischen von Flüssigfutter zu nutzen und den anderen der beiden Mischtanks als Transportmediumreservoir zu nutzen. Insbesondere ist die Steuereinheit vorzugsweise angeordnet und ausgebildet, zwischen den beiden Betriebsvarianten bedarfsweise umzuschalten bzw. umgeschaltet zu werden.

Die Mischtanks weisen ferner vorzugsweise mindestens eine Futterkomponentenzufuhr auf, wobei eine Futterkomponentenzufuhr vorzugsweise ein Frischwasserzulauf ist und daneben vorzugsweise mindestens eine weitere Futterkomponentenzufuhr vorgesehen ist.

Die jeweiligen Leitungen und Zufuhreinrichtungen, Öffnungen sowie Ein- und/oder Ausgänge sind vorzugsweise mit Ventilen, Absperrorganen und/oder Reglern versehen, um den Strom der jeweiligen Medien durch die Leitungen und Zufuhreinrichtungen, Öffnungen sowie Ein- und/oder Ausgänge freigeben, sperren und/oder mengenmäßig begrenzen zu können.

Die Flüssigfütterungsanlage wird vorzugsweise ferner dadurch fortgebildet, dass die Steuereinheit mit verschiedenen Funktionselementen der Flüssigfütterungsanlage verbunden ist, vorzugsweise signaltechnisch verbunden ist, und/oder angeordnet und ausgebildet ist, verschiedene Funktionselemente der Flüssigfütterungsanlage anzusteuern, wobei die Funktionselemente beispielsweise als Ventile von Leitungen, insbesondere Flüssigfutterleitungen, Futterkomponentenleitungen und/oder Frischwasserleitungen, als Antriebe, beispielsweise von Fördervorrichtungen, Zufuhreinrichtungen, Rührwerken und/oder Reinigungseinrichtungen, ausgebildet sind.

Die Steuereinheit steuert vorzugsweise verschiedene Funktionselemente der Flüssigfütterungsanlage, um insbesondere die oben beschriebenen ersten und zweiten Betriebsvarianten der Flüssigfütterungsanlage umzusetzen. Insbesondere das Freigeben und Sperren von Leitungen sowie das Antreiben von Rührwerken der Mischtanks und von Fördereinrichtungen zur Förderung von Flüssigfutter oder Futterkomponenten ist hierzu bevorzugt.

Die Flüssigfütterungsanlage wird vorzugsweise ferner dadurch fortgebildet, dass die Steuereinheit ausgebildet ist, insbesondere vor Ansteuerung verschiedener Funktionselemente der Flüssigfütterungsanlage und/oder vor dem Anmischen von Flüssigfutter, zu überprüfen, ob eine vorbestimmte, anzumischende Menge Flüssigfutter mindestens dem Minimal-Anmischvolumen des ersten und/oder des zweiten Tanks entspricht und/oder maximal dem Maximal-Anmischvolumen des ersten und/oder des zweiten Tanks entspricht und vorzugsweise die Flüssigfütterungsanlage, insbesondere deren verschiedene Funktionselemente, so anzusteuern, dass die vorbestimmte, anzumischende Menge Flüssigfutter in demjenigen der beiden Mischtanks angemischt wird, für den die vorbestimmte, anzumischende Menge Flüssigfutter zwischen dem Minimal- und dem Maximal-Anmischvolumen liegt.

Sollte die Prüfung ergeben, dass die vorbestimmte, anzumischende Menge Flüssigfutter zwischen dem Minimal- und dem Maximal-Anmischvolumen beider Mischtanks liegt, ist die Steuereinheit vorzugsweise ausgebildet, die Flüssigfütterungsanlage, insbesondere deren verschiedene Funktionselemente, so anzusteuern, dass die vorbestimmte, anzumischende Menge Flüssigfutter vorzugsweise im kleineren Mischtank angemischt wird.

In einer weiteren bevorzugten Ausgestaltung ist ferner bevorzugt, dass das zweite Minimal-Anmischvolumen mindestens dem Doppelten oder dem Dreifachen des ersten Minimal-Anmischvolumens entspricht. Ferner ist bevorzugt, dass der erste Mischtank ein erstes Maximal-Anmischvolumen aufweist und der zweite Mischtank ein zweites Maximal-Anmischvolumen aufweist, das größer ist als das erste Maximal-Anmischvolumen. Vorzugsweise ist ferner vorgesehen, dass das zweite Maximal-Anmischvolumen mindestens dem Doppelten oder dem Dreifachen des ersten Maximal-Anmischvolumens entspricht.

Die beschriebenen Mischtank-Volumina sind insbesondere bevorzugt, um die gerade in der Ferkelaufzucht und in der Sauenhaltung erforderlichen Flüssigfuttermengen in einer Flüssigfütterungsanlage mit nur zwei Mischtanks ohne Brauchwassertank bereitstellen zu können.

Eine weitere bevorzugte Ausgestaltung der Flüssigfütterungsanlage umfasst ferner ein Frischwasserreservoir, das über eine Frischwasserleitung mit einem Frischwasserzulauf des ersten Mischtanks und/oder mit einem Frischwasserzulauf des zweiten Mischtanks und/oder mit der Flüssigfutterleitung verbunden ist, wobei vorzugsweise die Steuereinheit angeordnet und ausgebildet ist, eine Frischwasserzufuhr vom Frischwasserreservoir über die Frischwasserleitung und den Frischwasserzulauf zum ersten und/oder zweiten Mischtank und/oder vom Frischwasserreservoir über die Frischwasserleitung zur Flüssigfutterleitung zu steuern. Frischwasser ist eine bevorzugte, in den meisten Flüssigfütterungsanlagen vorkommende Futterkomponente, die vorzugsweise über ein entsprechendes Frischwasserreservoir bereitgestellt wird. Das Frischwasser kann über eine Frischwasserleitung und einen Frischwasserzulauf direkt zum ersten oder zum zweiten Mischtank zugeführt werden. Alternativ oder zusätzlich kann Frischwasser auch direkt in die Flüssigfutterleitung gefördert werden.

In einer weiteren Ausgestaltung umfasst die Flüssigfütterungsanlage ferner mindestens ein Futterkomponentenreservoir, das über mindestens eine Futterkomponentenzufuhreinrichtung mit dem ersten und/oder dem zweiten Mischtank verbunden ist, wobei vorzugsweise die Steuereinheit angeordnet und ausgebildet ist, eine Futterkomponentenzufuhr vom Futterkomponentenreservoir über die Futterkomponentenzufuhreinrichtung zum ersten und/oder zweiten Mischtank zu steuern.

In dieser Fortbildungsform wird vorzugsweise ein Futterkomponentenreservoir, insbesondere mehrere Futterkomponentenreservoirs, bereitgestellt. Insbesondere, wenn bereits ein Frischwasserreservoir zur Bereitstellung der Futterkomponente Frischwasser existiert, dient das mindestens eine weitere Futterkomponentenreservoir beispielsweise zur Bereitstellung von festen oder pastösen Futterkomponenten. Eine Futterkomponentenzufuhreinrichtung kann beispielsweise als Förderschnecke ausgebildet sein, die feste, insbesondere schüttfähige, Futterkomponenten wahlweise zu einem oder beiden der Mischtanks zuführen kann. Auch die Zufuhr und vorzugsweise eine Dosierung der Futterkomponenten aus dem Futterkomponentenreservoir über die Futterkomponentenzufuhreinrichtung wird vorzugsweise von der Steuereinheit gesteuert, insbesondere, um das Anmischen von Flüssigfutter im ersten oder im zweiten Mischtank gemäß der ersten oder zweiten Betriebsvariante zu ermöglichen.

Gemäß einem weiteren Aspekt der Erfindung wird die eingangs genannte Aufgabe gelöst durch eine Steuerungsvorrichtung für eine zuvor beschriebene Flüssigfütterungsanlage für Nutztiere, umfassend eine Steuereinheit, die angeordnet und ausgebildet ist, in einer ersten Betriebsvariante eine Flüssigfütterungsanlage anzusteuern, um in einem ersten Mischtank zum Anmischen von Flüssigfutter mit einem ersten Flüssigfutterausgang für angemischtes Flüssigfutter Flüssigfutter, vorzugsweise eine vorbestimmte erste Menge Flüssigfutter, anzumischen, das Flüssigfutter über den ersten Flüssigfutterausgang des ersten Mischtanks in eine Flüssigfutterleitung, insbesondere eine Ringflüssigfutterleitung, auszugeben, das Flüssigfutter durch die Flüssigfutterleitung zu fördern, in der Flüssigfutterleitung befindliches Transportmedium in einen zweiten Mischtank zum Anmischen von Flüssigfutter mit einem zweiten Flüssigfutterausgang für angemischtes Flüssigfutter zu fördern, und Transportmedium über den zweiten Flüssigfutterausgang des zweiten Mischtanks in die Flüssigfutterleitung auszugeben, wenn eine vorbestimmte Menge, vorzugsweise die vorbestimmte erste Menge, Flüssigfutter aus dem ersten Mischtank in die Flüssigfutterleitung ausgegeben wurde.

Die Steuerungsvorrichtung wird vorzugsweise dadurch fortgebildet, dass die Steuereinheit angeordnet und ausgebildet ist, in einer zweiten Betriebsvariante eine Flüssigfütterungsanlage anzusteuern, um in dem zweiten Mischtank Flüssigfutter, vorzugsweise eine vorbestimmte zweite Menge Flüssigfutter, anzumischen, das Flüssigfutter über den zweiten Flüssigfutterausgang des zweiten Mischtanks in die Flüssigfutterleitung auszugeben, das Flüssigfutter durch die Flüssigfutterleitung zu fördern, in der Flüssigfutterleitung befindliches Transportmedium in den ersten Mischtank zu fördern, und Transportmedium über den ersten Flüssigfutterausgang des ersten Mischtanks in die Flüssigfutterleitung auszugeben, wenn eine vorbestimmte Menge, vorzugsweise die vorbestimmte zweite Menge, Flüssigfutter aus dem zweiten Mischtank in die Flüssigfutterleitung ausgegeben wurde.

Ferner wird die Steuerungsvorrichtung vorzugsweise dadurch fortgebildet, dass die Steuereinheit angeordnet und ausgebildet ist, mit verschiedenen Funktionselementen einer Flüssigfütterungsanlage verbunden zu werden, vorzugsweise signaltechnisch verbunden zu werden, und/oder verschiedene Funktionselemente einer Flüssigfütterungsanlage anzusteuern, wobei die Funktionselemente beispielsweise als Ventile von Leitungen, insbesondere Flüssigfutterleitungen, Futterkomponentenleitungen und/oder Frischwasserleitungen, als Antriebe, beispielsweise von Fördervorrichtungen, Zufuhreinrichtungen, Rührwerken und/oder Reinigungseinrichtungen, ausgebildet sind.

Die Steuerungsvorrichtung und ihre Fortbildungen weisen Merkmale auf, die sie insbesondere dafür geeignet machen, für eine erfindungsgemäße Flüssigfütterungsanlage und ihre Fortbildungen verwendet zu werden. Zu den Vorteilen, Ausführungsvarianten und Ausführungsdetails der Steuerungsvorrichtung und ihren möglichen Fortbildungen wird daher auf die vorangegangene Beschreibung zu den entsprechenden Merkmalen der Flüssigfütterungsanlage verwiesen.

Gemäß einem weiteren Aspekt der Erfindung wird die eingangs genannte Aufgabe gelöst durch ein Verfahren zur Flüssigfütterung von Nutztieren, umfassend: Anmischen von Flüssigfutter, vorzugsweise einer vorbestimmten ersten Menge Flüssigfutter, in einem ersten Mischtank zum Anmischen von Flüssigfutter mit einem ersten Flüssigfutterausgang für angemischtes Flüssigfutter, Ausgeben des Flüssigfutters über den ersten Flüssigfutterausgang des ersten Mischtanks in eine Flüssigfutterleitung, insbesondere eine Ringflüssigfutterleitung, Fördern des Flüssigfutters durch die Flüssigfutterleitung, Fördern von in der Flüssigfutterleitung befindlichem Transportmedium in einen zweiten Mischtank zum Anmischen von Flüssigfutter mit einem zweiten Flüssigfutterausgang für angemischtes Flüssigfutter, Ausgeben von Transportmedium über den zweiten Flüssigfutterausgang des zweiten Mischtanks in die Flüssigfutterleitung, wenn eine vorbestimmte Menge, vorzugsweise die vorbestimmte erste Menge, Flüssigfutter aus dem ersten Mischtank in die Flüssigfutterleitung ausgegeben wurde.

Das Verfahren umfasst vorzugsweise ferner die folgenden Schritte: Anmischen von Flüssigfutter, vorzugsweise einer vorbestimmten zweiten Menge Flüssigfutter, in dem zweiten Mischtank, Ausgeben des Flüssigfutters über den zweiten Flüssigfutterausgang des zweiten Mischtanks in die Flüssigfutterleitung, Fördern des Flüssigfutters durch die Flüssigfutterleitung, Fördern von in der Flüssigfutterleitung befindlichem Transportmedium in den ersten Mischtank, Ausgeben von Transportmedium über den ersten Flüssigfutterausgang des ersten Mischtanks in die Flüssigfutterleitung, wenn eine vorbestimmte Menge, vorzugsweise die vorbestimmte zweite Menge, Flüssigfutter aus dem zweiten Mischtank in die Flüssigfutterleitung ausgegeben wurde.

Vorzugsweise zeichnet sich das Verfahren ferner dadurch aus, dass vor dem Anmischen von Flüssigfutter überprüft wird, vorzugsweise mittels einer Steuereinheit, ob die vorbestimmte, anzumischende Menge Flüssigfutter mindestens dem Minimal-Anmischvolumen des ersten und/oder des zweiten Tanks entspricht und/oder maximal dem Maximal-Anmischvolumen des ersten und/oder des zweiten Tanks entspricht und, vorzugsweise durch Ansteuern der Flüssigfütterungsanlage, insbesondere deren verschiedene Funktionselemente, die vorbestimmte Menge Flüssigfutter in demjenigen der beiden Mischtanks angemischt wird, für den die vorbestimmte Menge Flüssigfutter zwischen dem Minimal- und dem Maximal-Anmischvolumen liegt. Sollte die Prüfung ergeben, dass die vorbestimmte, anzumischende Menge Flüssigfutter zwischen dem Minimal- und dem Maximal-Anmischvolumen beider Mischtanks liegt, wird die vorbestimmte, anzumischende Menge Flüssigfutter vorzugsweise im kleineren Mischtank angemischt, vorzugsweise durch Ansteuerung der Flüssigfütterungsanlage, insbesondere deren verschiedene Funktionselemente, durch die Steuereinheit.

Ferner ist bevorzugt, dass das Verfahren auch die folgenden Schritte umfasst: Schließen eines Ventils zwischen dem ersten Flüssigfutterausgang und der Flüssigfutterleitung, wenn eine vorbestimmte Menge, vorzugsweise die vorbestimmte erste Menge,

Flüssigfutter aus dem ersten Mischtank in die Flüssigfutterleitung ausgegeben wurde, und/oder Schließen eines Ventils zwischen dem zweiten Flüssigfutterausgang und der Flüssigfutterleitung, wenn eine vorbestimmte Menge, vorzugsweise die vorbestimmte zweite Menge, Flüssigfutter aus dem zweiten Mischtank in die Flüssigfutterleitung ausgegeben wurde.

Vorzugsweise ist in dem Verfahren ferner der Schritt vorgesehen, Öffnen, vorzugsweise sukzessives Öffnen, von mehreren Futterventilen der Flüssigfutterleitung zum Abgeben von Flüssigfutter an Fressstellen für Nutztiere, vorzugsweise für eine vorbestimmte Dauer.

Eine weitere Fortbildung des Verfahrens sieht vor, dass das Anmischen von Flüssigfutter im ersten und/oder zweiten Mischtank das Zuführen von Futterkomponenten zum ersten und/oder zweiten Mischtank umfasst und/oder das Antreiben eines Rührwerks im ersten und/oder zweiten Mischtank umfasst.

Ferner ist bevorzugt, dass das Verfahren den Schritt umfasst: Reinigen des ersten und/oder zweiten Mischtanks, vorzugsweise durch Versprühen und/oder Vernebeln eines Reinigungsmittels mittels einer, vorzugsweise im ersten und/oder zweiten Mischtank angeordneten, Reinigungseinrichtung, die vorzugsweise über eine Frischwasserleitung mit einem Frischwasserreservoir verbunden ist.

Das erfindungsgemäße Verfahren und seine Fortbildungen weisen Merkmale bzw. Verfahrensschritte auf, die sie insbesondere dafür geeignet machen, für eine erfindungsgemäße Flüssigfütterungsanlage und ihre Fortbildungen verwendet zu werden. Zu den Vorteilen, Ausführungsvarianten und Ausführungsdetails des Verfahrens und seiner Fortbildungen wird daher auf die vorangegangene Beschreibung zu den entsprechenden Merkmalen der Flüssigfütterungsanlage verwiesen.

Eine bevorzugte Ausführungsform der Erfindung wird beispielhaft anhand der beiliegenden Figur beschrieben. Es zeigt:

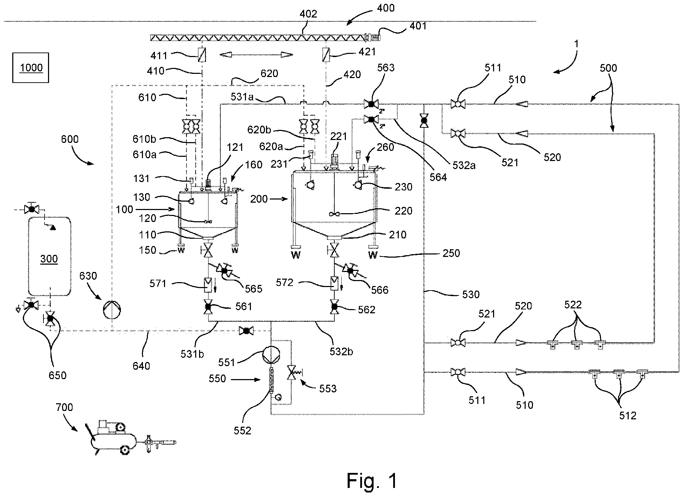

- Figur 1:: eine beispielhafte Ausgestaltung einer erfindungsgemäßen Flüssigfütterungsanlage.

Figur 1 zeigt eine beispielhafte Ausführungsform einer Flüssigfütterungsanlage 1 für Nutztiere, insbesondere für eine Fütterungsanlage 1, die sowohl zur Ferkelfütterung als auch zur Sauenfütterung eingesetzt wird. Die Flüssigfütterungsanlage 1 umfasst einen ersten Mischtank 100 zum Anmischen von Flüssigfutter mit einem erste Flüssigfutterausgang 110 für angemischtes Flüssigfutter und einen zweiten Mischtank 200 zum Anmischen von Futterkomponenten mit einem zweiten Flüssigfutterausgang 210 für angemischtes Flüssigfutter. Der erste Mischtank 100 ist kleiner als der zweite Mischtank 200, insbesondere weist der zweite Mischtank 200 Minimal- und Maximal-Anmischvolumina auf, die größer sind als die Minimal- und Maximal-Anmischvolumina des ersten Mischtanks 100. Vorzugsweise weist der erste Mischtank 100 ein erstes Minimal-Anmischvolumen von ca. 15l und ein erstes Maximal-Anmischvolumen von ca. 500l auf. Vorzugsweise weist der zweite Mischtank 200 ein zweites Minimal-Anmischvolumen von ca. 50l und ein zweites Maximal-Anmischvolumen von ca. 17001 auf.

Der erste Mischtank 100 dient insbesondere dazu, Flüssigfutter in einer geringeren Menge für die Ferkelfütterung anzumischen, wobei der zweite Mischtank 200 insbesondere dazu dient, größere Mengen Flüssigfutter für die Sauenfütterung anzumischen. Ein zusätzliches Transportmediumreservoir oder Brauchwassertank ist in der Flüssigfütterungsanlage 1 nicht vorgesehen und auch nicht erforderlich.

Der erste und zweite Flüssigfutterausgang 110, 210 des ersten und zweiten Mischtanks 100, 200 sind mit einer Flüssigfutterleitung 500 verbunden.

Ferner weist die Flüssigfütterungsanlage 1 einen Frischwassertank 300 auf, über den die Futterkomponente Frischwasser bereitgestellt und über die Frischwasserleitung 600 den beiden Mischtanks 100, 200 und der Flüssigfutterleitung 500 zugeführt werden kann. Ferner ist eine Futterkomponentenzufuhreinrichtung 400, insbesondere für feste oder pastöse Futterkomponenten vorgesehen, über die Futterkomponenten den beiden Mischtanks 100, 200 zugeführt werden können.

Die beiden Mischtanks 100, 200 weisen jeweils ein Rührwerk 120, 220 auf, das über einen Rührwerksantrieb 121, 221 antreibbar ist. Ferner weisen die beiden Mischtanks 100, 200 Reinigungseinrichtungen 130, 230 auf, die über Antriebe 131, 231 angetrieben werden können und die über Frischwasserleitungsabschnitte 610b, 620b mit Frischwasser versorgt werden können. Ferner weisen die beiden Mischtanks 100, 200 Nebeldüsen 160, 260 auf, über die Reinigungsmittel vernebelt werden können. Ferner sind beide Mischtanks 100, 200 auf Wiegestäben 150, 250 gelagert, um die Ermittlung des Gewichts des Flüssigfutters in dem jeweiligen Mischtank zu ermöglichen.

Die Futterkomponentenzufuhreinrichtung 400 umfasst in dem in Fig. 1 gezeigten Beispiel eine Quer-Förderschnecke 402, die von einem Antrieb 401 antreibbar ist. Über die Futterkomponentenleitungen 410, 420 können Futterkomponenten zu den beiden Mischtanks 100, 200 zugeführt werden. Über die Einlaufklappen 411, 421 können die Futterkomponentenleitungen 410, 420 wahlweise freigegeben oder gesperrt werden.

Die Frischwasserleitung 600 umfasst verschiedene Abschnitte 610, 620, 610a,b, 620a,b, die die Frischwasserzufuhr zu den beiden Mischtanks 100, 200 darstellen und einen Abschnitt 640, der die Frischwasserzufuhr in die Flüssigfutterleitung 500 darstellt. Zur Förderung des Frischwassers ist in der Frischwasserleitung 600 eine Pumpe 630 vorgesehen. Ferner sind in der Frischwasserleitung 600 verschiedene Ventile 650 vorgesehen, die die jeweiligen Abschnitte der Frischwasserleitung 600 freigeben oder sperren können.

Die Flüssigfutterleitung 500 weist zunächst einen sogenannten kleinen Kreis 530 auf, in dem die beiden Mischtanks 100, 200 über die Flüssigfutterleitungsabschnitte 531 a,b und 532a,b parallel geschaltet sind. Im kleinen Kreis 530 ist ferner ein Pumpmodul 550 vorgesehen mit einer Pumpe 551 und einem nachgeschalteten Schlauchkompensator 552 sowie einem zur Pumpe 551 und dem Schlauchkompensator 552 parallel geschalteten Überdruckventil 553.

An den sogenannten kleinen Kreis 530 schließen sich eine Ringflüssigfutterleitung 510 an, die zu Abgabestellen bzw. Futterventilen 512 in einem Bereich der Ferkelhaltung führt sowie eine Ringflüssigfutterleitung 520, die zu Abgabestellen bzw. Futterventilen 522 in einem Bereich für Sauen führt. Diese Ringflüssigfutterleitungen 510, 520 sind jeweils durch Ventile 511, 521 wahlweise freigebbar oder sperrbar.

Ebenso sind die parallelen Abschnitte 531 a,b, 532a,b des kleinen Kreises 530 durch verschiedene Ventile 561, 562, 563, 564 freigeb- und sperrbar, wobei der Durchfluss durch die Leitungsabschnitte 531b, 532b ferner durch die Fremdkörperabscheider 571, 572 läuft.

Ferner ist ein Kompressor 700 vorgesehen, der Druckluft für eine bevorzugt druckluftbetätigte Ansteuerung der Ventile 511, 521, 561, 562, 563, 564 und 650 bereitstellt und vorzugsweise über entsprechende Leitungen mit den Ventilen verbunden ist. Stromabwärts der Flüssigfutterausgänge 110, 210 sind ferner Abzweigleitungen mit Handventilen 565, 566 vorgesehen, über die angemischtes Flüssigfutter manuell entnommen werden kann, beispielsweise für Proben.

Die Flüssigfütterungsanlage 1 umfasst ferner eine Steuereinheit 1000. Die Steuereinheit 1000 ist angeordnet und ausgebildet, in einer ersten Betriebsvariante die Flüssigfütterungsanlage 1 anzusteuern, um in dem ersten Mischtank 100 eine vorbestimmte erste Menge Flüssigfutter anzumischen, das angemischte Flüssigfutter über den ersten Flüssigfutterausgang 110 in die Flüssigfutterleitung 500, nämlich über die Flüssigfutterleitungsabschnitte 531 b, in die Ringflüssigfutterleitung 510 für Ferkel zu fördern. Ferner ist die Steuereinheit 1000 angeordnet und ausgebildet, die Flüssigfütterungsanlage 1 so anzusteuern, dass in der Flüssigfutterleitung 500 zuvor befindliches Brauchwasser in den zweiten Mischtank 200 gefördert wird und Brauchwasser aus dem zweiten Mischtank 200 über den zweiten Flüssigfutterausgang 210 und den Flüssigfutterleitungsabschnitt 532b in die Ringflüssigfutterleitung 510 für Ferkel ausgegeben wird, sobald die vorbestimmte erste Menge Flüssigfutter aus dem ersten Mischtank 100 in die Flüssigfutterleitung 500 ausgegeben wurde.

Anschließend an einen solchen ersten Füttervorgang für Ferkel in der ersten Betriebsvariante kann die Steuereinheit dann in eine zweite Betriebsvariante umgeschaltet werden, in der die Steuereinheit die Flüssigfütterungsanlage 1 so ansteuert, dass in dem zweiten Mischtank 200 eine vorbestimmte zweite Menge Flüssigfutter angemischt wird und über den zweiten Flüssigfutterausgang 210 und die Flüssigfutterleitungsabschnitte 532b an die Ringflüssigfutterleitung 520 für Sauen abgegeben wird. Die Steuereinheit 1000 ist ferner vorzugsweise ausgebildet, in der zweiten Betriebsvariante das zuvor in der Flüssigfutterleitung 500 befindliche Brauchwasser in den ersten Mischtank 100 zu fördern und über den ersten Flüssigfutterausgang 110 über die Flüssigfutterleitungsabschnitte 531 b an die Ringflüssigfutterleitung 520 für Sauen auszugeben, wenn die vorbestimmte zweite Menge Flüssigfutter aus dem zweiten Mischtank 200 in die Flüssigfutterleitung 500 ausgegeben wurde.

Dazu ist die Steuereinheit 1000 vorzugsweise mit den verschiedenen Funktionselementen, wie beispielsweise den Ventilen 511, 521, 561, 562, 563, 564, 650, den Fördervorrichtungen 551, 630, den Antrieben 121, 221, 131, 231, 401, der Futterkomponentenzufuhreinrichtung 400 und den Wiegestäben 150, 250 verbunden, insbesondere signaltechnisch verbunden, um Signale zu empfangen, auszuwerten, zu verarbeiten, zu generieren und/oder auszugeben, um die für die zuvor beschriebene erste und zweite Betriebsvariante erforderlichen Steuerungen der Flüssigfütterungsanlage 1 vorzunehmen.

Die Steuereinheit ist vorzugsweise ferner ausgebildet, nach einem Fütterungsvorgang die Reinigungseinrichtungen 130, 230 anzusteuern, um den ersten und/oder den zweiten Mischtank 100, 200 zu reinigen.

Durch die erfindungsgemäße Ausbildung insbesondere der Steuereinheit 1000 wird es möglich, den jeweils für die Fütterung nicht benötigten Mischtank als Brauchwassertank zu nutzen und somit in einer Fütterungsanlage, die mit zwei vorzugsweise unterschiedlich großen Mischtanks Flüssigfutter in unterschiedlichen Mengen bereitstellen kann, auf einen separaten Brauchwassertank zu verzichten.

### BEZUGSZEICHEN

- 1: Fütterungsanlage
- 100, 200: Mischtank
- 110, 210: Flüssigfutterausgang
- 120, 220: Rührwerk
- 121, 221: Rührwerksantrieb
- 130, 230: Reinigungseinrichtungen
- 131, 231: Antriebe
- 150, 250: Wiegestab
- 160, 260: Nebeldüsen
- 300: Frischwassertank
- 400: Futterkomponentenzufuhreinrichtung
- 401: Antrieb
- 402: Quer-Förderschnecke
- 410, 420: Futterkomponentenleitungen
- 411, 421: Einlaufklappe
- 500: Flüssigfutterleitung
- 510, 520: Ringflüssigfutterleitung
- 511, 521, 561, 562, 563, 564, 650: Ventil
- 512, 522: Abgabestelle (Futterventil)
- 530: kleiner Kreis
- 531a, 531b, 532a, 532b: Flüssigfutterleitungsabschnitte
- 550: Pumpmodul
- 551: Pumpe
- 552: Schlauchkompensator
- 553: Überdruckventil
- 565, 566: Handventil
- 571, 572: Fremdkörperabscheider
- 600: Frischwasserleitung
- 610, 610a, 610b, 620, 620a, 620b, 640: Frischwasserleitungsabschnitt
- 630: Pumpe
- 700: Kompressor
- 1000: Steuereinheit

## Patentansprüche

1. Flüssigfütterungsanlage (1) für Nutztiere, umfassend
- einen ersten Mischtank (100) zum Anmischen von Flüssigfutter mit einem ersten Flüssigfutterausgang (110) für angemischtes Flüssigfutter,
- einen zweiten Mischtank (200) zum Anmischen von Futterkomponenten mit einem zweiten Flüssigfutterausgang (210) für angemischtes Flüssigfutter,
- wobei der erste Mischtank (100) ein erstes Minimal-Anmischvolumen aufweist und der zweite Mischtank (200) ein zweites Minimal-Anmischvolumen aufweist, und vorzugsweise das zweite Minimal-Anmischvolumen größer ist als das erste Minimal-Anmischvolumen; und
- eine Steuereinheit (1000), die angeordnet und ausgebildet ist, in einer ersten Betriebsvariante die Flüssigfütterungsanlage (1) anzusteuern, um in dem ersten Mischtank (100) Flüssigfutter, vorzugsweise eine vorbestimmte erste Menge Flüssigfutter, anzumischen, das Flüssigfutter über den ersten Flüssigfutterausgang (110) des ersten Mischtanks (100) in eine Flüssigfutterleitung (500), insbesondere eine Ringflüssigfutterleitung (510, 520), auszugeben, das Flüssigfutter durch die Flüssigfutterleitung (500) zu fördern, in der Flüssigfutterleitung (500) befindliches Transportmedium in den zweiten Mischtank (200) zu fördern, und Transportmedium über den zweiten Flüssigfutterausgang (210) des zweiten Mischtanks (200) in die Flüssigfutterleitung (500) auszugeben, wenn eine vorbestimmte Menge, vorzugsweise die vorbestimmte erste Menge, Flüssigfutter aus dem ersten Mischtank (100) in die Flüssigfutterleitung (500) ausgegeben wurde.

2. Flüssigfütterungsanlage (1) nach dem vorhergehenden Anspruch,
**dadurch gekennzeichnet, dass** die Steuereinheit (1000) angeordnet und ausgebildet ist, in einer zweiten Betriebsvariante die Flüssigfütterungsanlage (1) anzusteuern, um in dem zweiten Mischtank (200) Flüssigfutter, vorzugsweise eine vorbestimmte zweite Menge Flüssigfutter, anzumischen, das Flüssigfutter über den zweiten Flüssigfutterausgang (210) des zweiten Mischtanks (200) in die Flüssigfutterleitung (500) auszugeben, das Flüssigfutter durch die Flüssigfutterleitung (500) zu fördern, in der Flüssigfutterleitung (500) befindliches Transportmedium in den ersten Mischtank (100) zu fördern, und Transportmedium über den ersten Flüssigfutterausgang (110) des ersten Mischtanks (100) in die Flüssigfutterleitung (500) auszugeben, wenn eine vorbestimmte Menge, vorzugsweise die vorbestimmte zweite Menge, Flüssigfutter aus dem zweiten Mischtank (200) in die Flüssigfutterleitung (500) ausgegeben wurde.

3. Flüssigfütterungsanlage (1) nach mindestens einem der vorhergehenden Ansprüche,
**dadurch gekennzeichnet, dass** die Steuereinheit (1000) mit verschiedenen Funktionselementen der Flüssigfütterungsanlage (1) verbunden ist, vorzugsweise signaltechnisch verbunden ist, und/oder angeordnet und ausgebildet ist, verschiedene Funktionselemente der Flüssigfütterungsanlage (1) anzusteuern, wobei die Funktionselemente beispielsweise als Ventile von Leitungen, insbesondere Flüssigfutterleitungen (500), Futterkomponentenleitungen (410, 420) und/oder Frischwasserleitungen (600), als Antriebe (401), beispielsweise von Fördervorrichtungen, Zufuhreinrichtungen, Rührwerken (120, 220) und/oder Reinigungseinrichtungen (130, 230), ausgebildet sind.

4. Flüssigfütterungsanlage (1) nach mindestens einem der vorhergehenden Ansprüche,
**dadurch gekennzeichnet, dass** das zweite Minimal-Anmischvolumen mindestens dem Doppelten oder dem Dreifachen des ersten Minimal-Anmischvolumens entspricht,
und/oder
**dadurch gekennzeichnet, dass** der erste Mischtank (100) ein erstes Maximal-Anmischvolumen aufweist und der zweite Mischtank (200) ein zweites Maximal-Anmischvolumen aufweist, das größer ist als das erste Maximal-Anmischvolumen, wobei vorzugsweise das zweite Maximal-Anmischvolumen mindestens dem Doppelten oder dem Dreifachen des ersten Maximal-Anmischvolumens entspricht.

5. Flüssigfütterungsanlage (1) nach mindestens einem der vorhergehenden Ansprüche,
ferner umfassend ein Frischwasserreservoir (300), das über eine Frischwasserleitung (600) mit einem Frischwasserzulauf des ersten Mischtanks (100) und/oder mit einem Frischwasserzulauf des zweiten Mischtanks (200) und/oder mit der Flüssigfutterleitung (500) verbunden ist, wobei vorzugsweise die Steuereinheit (1000) angeordnet und ausgebildet ist, eine Frischwasserzufuhr vom Frischwasserreservoir (300) über die Frischwasserleitung (500) und den Frischwasserzulauf zum ersten und/oder zweiten Mischtank (100, 200) und/oder vom Frischwasserreservoir (300) über die Frischwasserleitung (600) zur Flüssigfutterleitung (500) zu steuern.

6. Flüssigfütterungsanlage (1) nach mindestens einem der vorhergehenden Ansprüche,
ferner umfassend mindestens ein Futterkomponentenreservoir, das über mindestens eine Futterkomponentenzufuhreinrichtung (400) mit dem ersten und/oder dem zweiten Mischtank (100, 200) verbunden ist, wobei vorzugsweise die Steuereinheit (1000) angeordnet und ausgebildet ist, eine Futterkomponentenzufuhr vom Futterkomponentenreservoir über die Futterkomponentenzufuhreinrichtung (400) zum ersten und/oder zweiten Mischtank (100, 200) zu steuern.

7. Steuerungsvorrichtung für eine Flüssigfütterungsanlage (1) für Nutztiere nach mindestens einem der vorhergehenden Ansprüche, umfassend eine Steuereinheit (1000), die angeordnet und ausgebildet ist, in einer ersten Betriebsvariante eine Flüssigfütterungsanlage (1) anzusteuern, um in einem ersten Mischtank (100) zum Anmischen von Flüssigfutter mit einem ersten Flüssigfutterausgang (110) für angemischtes Flüssigfutter, vorzugsweise eine vorbestimmte erste Menge Flüssigfutter, anzumischen, das Flüssigfutter über den ersten Flüssigfutterausgang (110) des ersten Mischtanks (100) in eine Flüssigfutterleitung (500), insbesondere eine Ringflüssigfutterleitung (510, 520), auszugeben, das Flüssigfutter durch die Flüssigfutterleitung (500) zu fördern, in der Flüssigfutterleitung (500) befindliches Transportmedium in einen zweiten Mischtank (200) zum Anmischen von Flüssigfutter mit einem zweiten Flüssigfutterausgang (210) für angemischtes Flüssigfutter zu fördern, und Transportmedium über den zweiten Flüssigfutterausgang (210) des zweiten Mischtanks (200) in die Flüssigfutterleitung (500) auszugeben, wenn eine vorbestimmte Menge, vorzugsweise die vorbestimmte erste Menge, Flüssigfutter aus dem ersten Mischtank (100) in die Flüssigfutterleitung (500) ausgegeben wurde.

8. Steuerungsvorrichtung nach dem vorhergehenden Anspruch, wobei die Steuereinheit (1000) angeordnet und ausgebildet ist, in einer zweiten Betriebsvariante eine Flüssigfütterungsanlage (1) anzusteuern, um in dem zweiten Mischtank (200) Flüssigfutter, vorzugsweise eine vorbestimmte zweite Menge Flüssigfutter, anzumischen, das Flüssigfutter über den zweiten Flüssigfutterausgang (210) des zweiten Mischtanks (200) in die Flüssigfutterleitung (500) auszugeben, das Flüssigfutter durch die Flüssigfutterleitung (500) zu fördern, in der Flüssigfutterleitung (500) befindliches Transportmedium in den ersten Mischtank (100) zu fördern, und Transportmedium über den ersten Flüssigfutterausgang (110) des ersten Mischtanks (100) in die Flüssigfutterleitung (500) auszugeben, wenn eine vorbestimmte Menge, vorzugsweise die vorbestimmte zweite Menge, Flüssigfutter aus dem zweiten Mischtank (200) in die Flüssigfutterleitung (500) ausgegeben wurde.

9. Steuerungsvorrichtung nach mindestens einem der beiden vorhergehenden Ansprüche,
**dadurch gekennzeichnet, dass** die Steuereinheit (1000) angeordnet und ausgebildet ist, mit verschiedenen Funktionselementen einer Flüssigfütterungsanlage (1) verbunden zu werden, vorzugsweise signaltechnisch verbunden zu werden, und/oder verschiedene Funktionselemente einer Flüssigfütterungsanlage (1) anzusteuern, wobei die Funktionselemente beispielsweise als Ventile (531 a, 531 b, 532a, 532b) von Leitungen, insbesondere Flüssigfutterleitungen (500), Futterkomponentenleitungen (410, 420) und/oder Frischwasserleitungen (600), als Antriebe (131, 231), beispielsweise von Fördervorrichtungen, Zufuhreinrichtungen, Rührwerken (120, 220) und/oder Reinigungseinrichtungen (130, 230), ausgebildet sind.

10. Verfahren zur Flüssigfütterung von Nutztieren,
umfassend:
- Anmischen von Flüssigfutter, vorzugsweise einer vorbestimmten ersten Menge Flüssigfutter, in einem ersten Mischtank (100) zum Anmischen von Flüssigfutter mit einem ersten Flüssigfutterausgang (110) für angemischtes Flüssigfutter,
- Ausgeben des Flüssigfutters über den ersten Flüssigfutterausgang (110) des ersten Mischtanks (100) in eine Flüssigfutterleitung (500), insbesondere eine Ringflüssigfutterleitung (510, 520),
- Fördern des Flüssigfutters durch die Flüssigfutterleitung (500),
- Fördern von in der Flüssigfutterleitung (500) befindlichem Transportmedium in einen zweiten Mischtank (200) zum Anmischen von Flüssigfutter mit einem zweiten Flüssigfutterausgang (210) für angemischtes Flüssigfutter,
- Ausgeben von Transportmedium über den zweiten Flüssigfutterausgang (210) des zweiten Mischtanks (200) in die Flüssigfutterleitung (500), wenn eine vorbestimmte Menge, vorzugsweise die vorbestimmte erste Menge, Flüssigfutter aus dem ersten Mischtank (100) in die Flüssigfutterleitung (500) ausgegeben wurde.

11. Verfahren nach dem vorhergehenden Anspruch,
umfassend:
- Anmischen von Flüssigfutter, vorzugsweise einer vorbestimmten zweiten Menge Flüssigfutter, in dem zweiten Mischtank (200),
- Ausgeben des Flüssigfutters über den zweiten Flüssigfutterausgang (210) des zweiten Mischtanks (200) in die Flüssigfutterleitung (500),
- Fördern des Flüssigfutters durch die Flüssigfutterleitung (500),
- Fördern von in der Flüssigfutterleitung (500) befindlichem Transportmedium in den ersten Mischtank (100),
- Ausgeben von Transportmedium über den ersten Flüssigfutterausgang (110) des ersten Mischtanks (100) in die Flüssigfutterleitung (500), wenn eine vorbestimmte Menge, vorzugsweise die vorbestimmte zweite Menge, Flüssigfutter aus dem zweiten Mischtank (200) in die Flüssigfutterleitung (500) ausgegeben wurde.

12. Verfahren mindestens einem der beiden vorhergehenden Ansprüche,
**dadurch gekennzeichnet, dass** vor dem Anmischen von Flüssigfutter überprüft wird, vorzugsweise mittels einer Steuereinheit, ob die vorbestimmte, anzumischende Menge Flüssigfutter mindestens dem Minimal-Anmischvolumen des ersten und/oder des zweiten Tanks entspricht und/oder maximal dem Maximal-Anmischvolumen des ersten und/oder des zweiten Tanks entspricht und, vorzugsweise durch Ansteuern der Flüssigfütterungsanlage, insbesondere deren verschiedene Funktionselemente, die vorbestimmte Menge Flüssigfutter in demjenigen der beiden Mischtanks angemischt wird, für den die vorbestimmte Menge Flüssigfutter zumischen dem Minimal- und dem Maximal-Anmischvolumen liegt.

13. Verfahren nach mindestens einem der vorhergehenden Ansprüche 10-12, umfassend:
- Schließen eines Ventils (561) zumischen dem ersten Flüssigfutterausgang (110) und der Flüssigfutterleitung (500), wenn eine vorbestimmte Menge, vorzugsweise die vorbestimmte erste Menge, Flüssigfutter aus dem ersten Mischtank (100) in die Flüssigfutterleitung (500) ausgegeben wurde, und/oder
- Schließen eines Ventils (562) zumischen dem zweiten Flüssigfutterausgang (210) und der Flüssigfutterleitung (500), wenn eine vorbestimmte Menge, vorzugsweise die vorbestimmte zweite Menge, Flüssigfutter aus dem zweiten Mischtank (200) in die Flüssigfutterleitung (500) ausgegeben wurde.

14. Verfahren nach mindestens einem der vorhergehenden Ansprüche 10-13, umfassend:
- Öffnen, vorzugsweise sukzessives Öffnen, von mehreren Futterventilen (512, 522) der Flüssigfutterleitung (500) zum Abgeben von Flüssigfutter an Fressstellen für Nutztiere, vorzugsweise für eine vorbestimmte Dauer; und/oder
- Reinigen des ersten und/oder zweiten Mischtanks (100, 200), vorzugsweise durch Versprühen und/oder Vernebeln eines Reinigungsmittels mittels einer, vorzugsweise im ersten und/oder zweiten Mischtank (100, 200) angeordneten, Reinigungseinrichtung, die vorzugsweise über eine Frischwasserleitung (600) mit einem Frischwasserreservoir (300) verbunden ist.

15. Verfahren nach mindestens einem der vorhergehenden Ansprüche 10-14, wobei das Anmischen von Flüssigfutter im ersten und/oder zweiten Mischtank (100, 200) das Zuführen von Futterkomponenten zum ersten und/oder zweiten Mischtank (100, 200) umfasst und/oder das Antreiben eines Rührwerks (120, 220) im ersten und/oder zweiten Mischtank (120, 220) umfasst.

## Claims

1. Liquid feed dispensing system (1) for livestock, comprising
- a first mixing tank (100) for mixing liquid feed, having a first liquid feed outlet (110) for mixed liquid feed,
- a second mixing tank (200) for mixing feed components, having a second liquid feed outlet (210) for mixed liquid feed,
- wherein the first mixing tank (100) has a first minimum mixing volume and the second mixing tank (200) has a second minimum mixing volume, and preferably the second minimum mixing volume is greater than the first minimum mixing volume; and
- a control unit (1000) which is arranged and designed, in a first operating variant, to actuate the liquid feed dispensing system (1) to mix liquid feed, preferably a predetermined first quantity of liquid feed, in the first mixing tank (100), to discharge the liquid feed via the first liquid feed outlet (110) of the first mixing tank (100) into a liquid feed line (500), in particular a liquid feed ring line (510, 520), to convey the liquid feed through the liquid feed line (500), to convey transport medium located in the liquid feed line (500) into the second mixing tank (200), and to discharge transport medium via the second liquid feed outlet (210) of the second mixing tank (200) into the liquid feed line (500) when a predetermined quantity, preferably the predetermined first quantity, of liquid feed has been discharged from the first mixing tank (100) into the liquid feed line (500).

2. Liquid feed dispensing system (1) according to the preceding claim,
**characterised in that** the control unit (1000) is arranged and designed, in a second operating variant, to actuate the liquid feed dispensing system (1) to mix liquid feed, preferably a predetermined second quantity of liquid feed, in the second mixing tank (200), to discharge the liquid feed via the second liquid feed outlet (210) of the second mixing tank (200) into the liquid feed line (500), to convey the liquid feed through the liquid feed line (500), to convey transport medium located in the liquid feed line (500) into the first mixing tank (100), and to discharge transport medium via the first liquid feed outlet (110) of the first mixing tank (100) into the liquid feed line (500) when a predetermined quantity, preferably the predetermined second quantity, of liquid feed has been discharged from the second mixing tank (200) into the liquid feed line (500).

3. Liquid feed dispensing system (1) according to at least one of the preceding claims,
**characterised in that** the control unit (1000) is connected, preferably connected in signal processing terms, to various functional elements of the liquid feed dispensing system (1) and/or is arranged and designed to actuate various functional elements of the liquid feed dispensing system (1), wherein the functional elements are configured for example as valves of lines, in particular liquid feed lines (500), feed component lines (410, 420) and/or fresh water lines (600), as drives (401), for example of conveying devices, supply devices, stirring mechanisms (120, 220) and/or cleaning devices (130, 230).

4. Liquid feed dispensing system (1) according to at least one of the preceding claims,
**characterised in that** the second minimum mixing volume is at least two or three times the first minimum mixing volume,
and/or
**characterised in that** the first mixing tank (100) has a first maximum mixing volume and the second mixing tank (200) has a second maximum mixing volume that is greater than the first maximum mixing volume, wherein preferably the second maximum mixing volume is at least two or three times the first maximum mixing volume.

5. Liquid feed dispensing system (1) according to at least one of the preceding claims,
further comprising a fresh water reservoir (300) which is connected via a fresh water line (600) to a fresh water inlet of the first mixing tank (100) and/or to a fresh water inlet of the second mixing tank (200) and/or to the liquid feed line (500), wherein preferably the control unit (1000) is arranged and designed to control a supply of fresh water from the fresh water reservoir (300) via the fresh water line (500) and the fresh water inlet to the first and/or second mixing tank (100, 200) and/or from the fresh water reservoir (300) via the fresh water line (600) to the liquid feed line (500).

6. Liquid feed dispensing system (1) according to at least one of the preceding claims,
further comprising at least one feed component reservoir which is connected via at least one feed component supply device (400) to the first and/or second mixing tank (100, 200), wherein preferably the control unit (1000) is arranged and designed to control a supply of feed components from the feed component reservoir via the feed component supply device (400) to the first and/or second mixing tank (100, 200).

7. Control device for a liquid feed dispensing system (1) for livestock according to at least one of the preceding claims, comprising
a control unit (1000) which is arranged and designed, in a first operating variant, to actuate a liquid feed dispensing system (1) to mix liquid feed, preferably a predetermined first quantity of liquid feed, in a first mixing tank (100) for mixing liquid feed, which has a first liquid feed outlet (110) for mixed liquid feed, to discharge the liquid feed via the first liquid feed outlet (110) of the first mixing tank (100) into a liquid feed line (500), in particular a liquid feed ring line (510, 520), to convey the liquid feed through the liquid feed line (500), to convey transport medium located in the liquid feed line (500) into a second mixing tank (200) for mixing liquid feed, which has a second liquid feed outlet (210) for mixed liquid feed, and to discharge transport medium via the second liquid feed outlet (210) of the second mixing tank (200) into the liquid feed line (500) when a predetermined quantity, preferably the predetermined first quantity, of liquid feed has been discharged from the first mixing tank (100) into the liquid feed line (500).

8. Control device according to the preceding claim,
wherein the control unit (1000) is arranged and designed, in a second operating variant, to actuate a liquid feed dispensing system (1) to mix liquid feed, preferably a predetermined second quantity of liquid feed, in the second mixing tank (200), to discharge the liquid feed via the second liquid feed outlet (210) of the second mixing tank (200) into the liquid feed line (500), to convey the liquid feed through the liquid feed line (500), to convey transport medium located in the liquid feed line (500) into the first mixing tank (100), and to discharge transport medium via the first liquid feed outlet (110) of the first mixing tank (100) into the liquid feed line (500) when a predetermined quantity, preferably the predetermined second quantity, of liquid feed has been discharged from the second mixing tank (200) into the liquid feed line (500).

9. Control device according to at least one of the two preceding claims,
**characterised in that** the control unit (1000) is arranged and designed to be connected, preferably connected in signal processing terms, to various functional elements of a liquid feed dispensing system (1) and/or to actuate various functional elements of a liquid feed dispensing system (1), wherein the functional elements are configured for example as valves (531a, 531b, 532a, 532b) of lines, in particular liquid feed lines (500), feed component lines (410, 420) and/or fresh water lines (600), as drives (131, 231), for example of conveying devices, supply devices, stirring mechanisms (120, 220) and/or cleaning devices (130, 230).

10. Method for feeding livestock with liquid feed,
which method comprises:
- mixing liquid feed, preferably a predetermined first quantity of liquid feed, in a first mixing tank (100) for mixing liquid feed, which has a first liquid feed outlet (110) for mixed liquid feed,
- discharging the liquid feed via the first liquid feed outlet (110) of the first mixing tank (100) into a liquid feed line (500), in particular a liquid feed ring line (510, 520),
- conveying the liquid feed through the liquid feed line (500),
- conveying transport medium located in the liquid feed line (500) into a second mixing tank (200) for mixing liquid feed, which has a second liquid feed outlet (210) for mixed liquid feed,
- discharging transport medium via the second liquid feed outlet (210) of the second mixing tank (200) into the liquid feed line (500) when a predetermined quantity, preferably the predetermined first quantity, of liquid feed has been discharged from the first mixing tank (100) into the liquid feed line (500).

11. Method according to the preceding claim,
which method comprises:
- mixing liquid feed, preferably a predetermined second quantity of liquid feed, in the second mixing tank (200),
- discharging the liquid feed via the second liquid feed outlet (210) of the second mixing tank (200) into the liquid feed line (500),
- conveying the liquid feed through the liquid feed line (500),
- conveying transport medium located in the liquid feed line (500) into the first mixing tank (100),
- discharging transport medium via the first liquid feed outlet (110) of the first mixing tank (100) into the liquid feed line (500) when a predetermined quantity, preferably the predetermined second quantity, of liquid feed has been discharged from the second mixing tank (200) into the liquid feed line (500).

12. Method at least one of the two preceding claims, **characterised in that**, prior to mixing liquid feed, a check is carried out, preferably by means of a control unit, to ascertain whether the predetermined quantity of liquid feed to be mixed corresponds at least to the minimum mixing volume of the first and/or second tank and/or corresponds at most to the maximum mixing volume of the first and/or second tank and, preferably by actuating the liquid feed dispensing system, in particular the various functional elements thereof, the predetermined quantity of liquid feed is mixed **in that** one of the two mixing tanks for which the predetermined quantity of liquid feed lies between the minimum and maximum mixing volume.

13. Method according to at least one of the preceding claims 10-12,
which method comprises:
- closing a valve (561) between the first liquid feed outlet (110) and the liquid feed line (500) when a predetermined quantity, preferably the predetermined first quantity, of liquid feed has been discharged from the first mixing tank (100) into the liquid feed line (500), and/or
- closing a valve (562) between the second liquid feed outlet (210) and the liquid feed line (500) when a predetermined quantity, preferably the predetermined second quantity, of liquid feed has been discharged from the second mixing tank (200) into the liquid feed line (500).

14. Method according to at least one of the preceding claims 10-13,
which method comprises:
- opening, preferably successively opening, a plurality of feed valves (512, 522) of the liquid feed line (500) in order to dispense liquid feed at feeding points for livestock, preferably for a predetermined duration; and/or
- cleaning the first and/or second mixing tank (100, 200), preferably by spraying and/or misting a cleaning agent by means of a cleaning device which is preferably arranged in the first and/or second mixing tank (100, 200) and which is preferably connected via a fresh water line (600) to a fresh water reservoir (300) .

15. Method according to at least one of the preceding claims 10-14,
wherein the mixing of liquid feed in the first and/or second mixing tank (100, 200) includes the supplying of feed components to the first and/or second mixing tank (100, 200) and/or includes the driving of a stirring mechanism (120, 220) in the first and/or second mixing tank (120, 220).

## Revendications

1. Installation d'alimentation liquide (1) pour animaux de rente, comprenant
- une première cuve de mélange (100) servant à produire par mélange des aliments liquides, pourvue d'une première sortie d'aliments liquides (110) pour des aliments liquides produits par mélange,
- une deuxième cuve de mélange (200) servant à produire par mélange des composants d'aliments, pourvue d'une deuxième sortie d'aliments liquides (210) pour des aliments liquides produits par mélange,
- la première cuve de mélange (100) présentant un premier volume de production par mélange minimal et la deuxième cuve de mélange (200) présentant un deuxième volume de production par mélange minimal, et de préférence le deuxième volume de production par mélange minimal étant plus important que le premier volume de production par mélange minimal ; et
- une unité de commande (1000), qui est disposée et réalisée afin de piloter, lors d'une première variante de fonctionnement, l'installation d'alimentation liquide (1) afin de produire par mélange, dans la première cuve de mélange (100), des aliments liquides, de préférence une première quantité prédéfmie d'aliments liquides, afin de déverser les aliments liquides, par l'intermédiaire de la première sortie d'aliments liquides (110) de la première cuve de mélange (100), dans un conduit d'aliments liquides (500), en particulier un conduit annulaire d'aliments liquides (510, 520), afin de refouler les aliments liquides à travers le conduit d'aliments liquides (500), afin de refouler l'agent de transport se trouvant dans le conduit d'aliments liquides (500) dans la deuxième cuve de mélange (200) et afin de déverser l'agent de transport par l'intermédiaire de la deuxième sortie d'aliments liquides (210) de la deuxième cuve de mélange (200) dans le conduit d'aliments liquides (500) quand une quantité prédéterminée, de préférence la première quantité prédéterminée, d'aliments liquides provenant de la première cuve de mélange (100) a été déversée dans le conduit d'aliments liquides (500).

2. Installation d'alimentation liquide (1) selon la revendication précédente, **caractérisée en ce que** l'unité de commande (1000) est disposée et réalisée afin de piloter, lors d'une deuxième variante de fonctionnement, l'installation d'alimentation liquide (1) afin de produire par mélange, dans la deuxième cuve de mélange (200), des aliments liquides, de préférence une deuxième quantité prédéterminée d'aliments liquides, afin de déverser les aliments liquides, par l'intermédiaire de la deuxième sortie d'aliments liquides (210) de la deuxième cuve de mélange (200), dans le conduit d'aliments liquides (500), afin de refouler les aliments liquides (500) au travers du conduit d'aliments liquides (500), afin de refouler l'agent de transport se trouvant dans le conduit d'aliments liquides dans la première cuve de mélange (100), et afin de déverser l'agent de transport, par l'intermédiaire de la première sortie d'aliments liquides (110) de la première cuve de mélange (100), dans le conduit d'aliments liquides (500) quand une quantité prédéterminée, de préférence la deuxième quantité prédéterminée, d'aliments liquides provenant de la deuxième cuve de mélange (200) a été déversée dans le conduit d'aliments liquides (500).

3. Installation d'alimentation liquide (1) selon au moins l'une quelconque des revendications précédentes,
**caractérisée en ce que** l'unité de commande (1000) est reliée, de préférence par des signaux, à différents éléments fonctionnels de l'installation d'alimentation liquide (1), et/ou **en ce qu'**elle est disposée et/ou réalisée afin de piloter différents éléments fonctionnels de l'installation d'alimentation liquide (1), les éléments fonctionnels étant réalisés par exemple sous la forme de soupapes de conduits, en particulier de conduits d'aliments liquides (500), de conduits de composants d'aliments (410, 420), et/ou de conduits d'eau fraîche (600), sous la forme d'entraînements (401), par exemple de dispositifs de refoulement, de systèmes d'amenée, d'agitateurs (120, 220) et/ou de systèmes de nettoyage (130, 230).

4. Installation d'alimentation liquide (1) selon au moins l'une quelconque des revendications précédentes,
**caractérisée en ce que** le deuxième volume de production par mélange minimal correspond au moins au double ou au triple du premier volume de production par mélange minimal,
et/ou
**caractérisée en ce que** la première cuve de mélange (100) présente un premier volume de production par mélange maximal et la deuxième cuve de mélange (200) présente un deuxième volume de production par mélange maximal, qui est plus important que le premier volume de production par mélange maximal,
de préférence le deuxième volume de production par mélange maximal correspondant au moins au double ou au triple du premier volume de production par mélange maximal.

5. Installation d'alimentation liquide (1) selon au moins l'une quelconque des revendications précédentes,
comprenant en outre un réservoir d'eau fraîche (300), qui est relié, par l'intermédiaire d'un conduit d'eau fraîche (600), à une arrivée d'eau fraîche de la première cuve de mélange (100) et/ou à une arrivée d'eau fraîche de la deuxième cuve de mélange (200) et/ou au conduit d'aliments liquides (500), de préférence l'unité de commande (1000) étant disposée et réalisée afin de commander une amenée d'eau fraîche depuis le réservoir d'eau fraîche (300), en passant par le conduit d'eau fraîche (500) et l'arrivée d'eau fraîche, vers la première et/ou la deuxième cuve de mélange (100, 200) et/ou depuis le réservoir d'eau fraîche (300), en passant par le conduit d'eau fraîche (600), vers le conduit d'aliments liquides (500).

6. Installation d'alimentation liquide (1) selon au moins l'une quelconque des revendications précédentes,
comprenant en outre au moins un réservoir de composants d'aliments, qui est relié, par l'intermédiaire au moins d'un système d'amenée de composants d'aliments (400), à la première et/ou à la deuxième cuve de mélange (100, 200), de préférence l'unité de commande (1000) étant disposée et réalisée afin de commander une amenée de composants d'aliments depuis le réservoir de composants d'aliments, en passant par le système d'amenée de composants d'aliments (400), vers la première et/ou la deuxième cuve de mélange (100, 200).

7. Dispositif de commande pour une installation d'alimentation liquide (1) pour des animaux de rente selon au moins l'une quelconque des revendications précédentes, comprenant une unité de commande (1000), qui est disposée et réalisée afin de piloter, lors d'une première variante de fonctionnement, une installation d'alimentation liquide (1) afin de produire par mélange, dans une première cuve de mélange (100) servant à produire par mélange des aliments liquides, pourvue d'une première sortie d'aliments liquides (110) pour des aliments liquides produits par mélange, de préférence une première quantité prédéterminée d'aliments liquides, afin de déverser les aliments liquides par l'intermédiaire de la première sortie d'aliments liquides (500), en particulier un conduit annulaire d'aliments liquides (510, 520), afin de refouler les aliments liquides à travers le conduit d'aliments liquides (500), afin de refouler un agent de transport se trouvant dans le conduit d'aliments liquides (500) dans une deuxième cuve de mélange (200) servant à produire par mélange des aliments liquides, pourvue d'une deuxième sortie d'aliments liquides (210) pour des aliments liquides produits par mélange, et afin de déverser l'agent de transport, par l'intermédiaire de la deuxième sortie d'aliments liquides (210) de la deuxième cuve de mélange (200), dans le conduit d'aliments liquides (500) quand une quantité prédéterminée, de préférence la première quantité prédéterminée, d'aliments liquides provenant de la première cuve de mélange (100) a été déversée dans le conduit d'aliments liquides (500).

8. Dispositif de commande selon la revendication précédente, l'unité de commande (1000) étant disposée et réalisée afin de piloter, lors d'une deuxième variante de fonctionnement, une installation d'alimentation liquide (1) afin de produire par mélange, dans la deuxième cuve de mélange (200) des aliments liquides, de préférence une deuxième quantité prédéterminée, d'aliments liquides, afin de déverser les aliments liquides, par l'intermédiaire de la deuxième sortie d'aliments liquides (210) de la deuxième cuve de mélange (200), dans le conduit d'aliments liquides (500), afin de refouler les aliments liquides à travers le conduit d'aliments liquides (500), afin de refouler un agent de transport se trouvant dans le conduit d'aliments liquides (500) dans la première cuve de mélange (100) et afin de déverser un agent de transport par l'intermédiaire de la première sortie d'aliments liquides (110) de la première cuve de mélange (100) dans le conduit d'aliments liquides (500) quand une quantité prédéterminée, de préférence la deuxième quantité prédéterminée, d'aliments liquides provenant de la deuxième cuve de mélange (200) a été déversée dans le conduit d'aliments liquides (500).

9. Dispositif de commande selon au moins l'une quelconque des revendications précédentes,
**caractérisé en ce que** l'unité de commande (1000) est disposée et réalisée afin d'être reliée, de préférence par des signaux, à des éléments fonctionnels différents d'une installation d'alimentation liquide (1), et/ou afin de piloter différents éléments fonctionnels d'une installation d'alimentation liquide (1), les éléments fonctionnels étant réalisés par exemple sous la forme de soupapes (531a, 531b, 532a, 532b) de conduits, par exemple de conduits d'aliments liquides (500), de conduits de composants d'aliments (410, 420) et/ou de conduits d'eau fraîche (600), sous la forme d'entraînements (131, 231), par exemple de dispositifs de refoulement, de systèmes d'amenée, d'agitateurs (120, 200) et/ou de systèmes de nettoyage (130, 230).

10. Procédé servant à alimenter avec des liquides des animaux de rente,
comprenant les étapes suivantes :
- la production par mélange d'aliments liquides, de préférence d'une première quantité prédéterminée d'aliments liquides, dans une première cuve de mélange (100) servant à produire par ménage des aliments liquides, pourvue d'une première sortie d'aliments liquides (110) pour des aliments liquides produits par mélange ;
- le déversement des aliments liquides par l'intermédiaire de la première sortie d'aliments liquides (110) de la première cuve de mélange (100) dans un conduit d'aliments liquides (500), en particulier un conduit annulaire d'aliments liquides (510, 520) ;
- le refoulement des aliments liquides à travers le conduit d'aliments liquides (500) ;
- le refoulement d'un agent de transport se trouvant dans le conduit d'aliments liquides (500) dans une deuxième cuve de mélange (200) servant à produire par mélange des aliments liquides, pourvue d'une deuxième sortie d'aliments liquides (210) pour des aliments liquides produits par mélange ;
- le déversement du milieu de transport par l'intermédiaire de la deuxième sortie d'aliments liquides (210) de la deuxième cuve de mélange (200) dans le conduit d'aliments liquides (500), quand une quantité prédéterminée, de préférence la première quantité prédéterminée, d'aliments liquides provenant de la première cuve de mélange (100) a été déversée dans le conduit d'aliments liquides (500).

11. Procédé selon la revendication précédente,
comprenant les étapes suivantes :
- la production par mélange d'aliments liquides, de préférence d'une deuxième quantité prédéterminée d'aliments liquides, dans la deuxième cuve de mélange (200) ;
- le déversement des aliments liquides par l'intermédiaire de la deuxième sortie d'aliments liquides (210) du deuxième réservoir de mélange (200) dans le conduit d'aliments liquides (500) ;
- le refoulement des aliments liquides à travers le conduit d'aliments liquides (500) ;
- le refoulement d'un agent de transport se trouvant dans le conduit d'aliments liquides (500) dans la première cuve de mélange (100) ;
- le déversement d'un agent de transport par l'intermédiaire de la première sortie d'aliments liquides (110) de la première cuve de mélange (100) dans le conduit d'aliments liquides (500) quand une quantité prédéterminée, de préférence la deuxième quantité prédéterminée, d'aliments liquides provenant de la deuxième cuve de mélange (200) a été déversée dans le conduit d'aliments liquides (500).

12. Procédé au moins selon l'une quelconque des deux revendications précédentes, **caractérisé en ce qu'**il est vérifié avant la production par mélange des aliments liquides, de préférence au moyen d'une unité de commande, si la quantité prédéterminée à produire par mélange d'aliments liquides correspond au moins au volume de production par mélange minimal de la première et/ou de la deuxième cuve et/ou correspond au maximum au volume de production par mélange maximal de la première et/ou de la deuxième cuve, et de préférence par le pilotage de l'installation d'alimentation liquide, en particulier des différents éléments fonctionnels de cette dernière si la quantité prédéterminée d'aliments liquides est produite par mélange dans celle des deux cuves de mélange, pour laquelle précisément la quantité prédéterminée d'aliments liquides se situe entre le volume de production par mélange minimal et le volume de production par mélange maximal.

13. Procédé selon au moins l'une quelconque des revendications 10 - 12, comprenant les étapes suivantes :
- la fermeture d'une soupape (561) entre la première sortie d'aliments liquides (110) et le conduit d'aliments liquides (500) quand une quantité prédéterminée, de préférence la première quantité prédéterminée, d'aliments liquides provenant de la première cuve de mélange (100) a été déversée dans le conduit d'aliments liquide (500) ; et/ou
- la fermeture d'une soupape (562) entre la deuxième sortie d'aliments liquides (210) et le conduit d'aliments liquides (500) quand une quantité prédéterminée, de préférence la deuxième quantité prédéterminée, d'aliments liquides provenant de la deuxième cuve de mélange (200) a été déversée dans le conduit d'aliments liquide (500).

14. Procédé selon au moins l'une quelconque des revendications précédentes 10 - 13, comprenant les étapes suivantes :
- l'ouverture, de préférence l'ouverture successive, de plusieurs soupapes d'aliments (512, 522) du conduit d'aliments liquides (500) afin de délivrer des aliments liquides à des postes formant des mangeoires pour animaux de rente, de préférence pour une durée prédéterminée ;
et/ou
- le nettoyage de la première et/ou de la deuxième cuve de mélange (100, 200), de préférence en pulvérisant et/ou en nébulisant un produit de nettoyage au moyen d'un système de nettoyage disposé de préférence dans la première et/ou dans la deuxième cuve de mélange (100, 200), lequel système de nettoyage est relié de préférence par l'intermédiaire d'un conduit d'eau fraîche (600) à un réservoir d'eau fraîche (300).

15. Procédé selon au moins l'une quelconque des revendications précédentes 10 - 14, la production par mélange d'aliments liquides dans la première et/ou la deuxième cuve de mélange (100, 200) comprenant l'amenée de composants d'aliments à la première et/ou à la deuxième cuve de mélange (100, 200), et/ou comprenant l'entraînement d'un agitateur (120, 220) dans la première et/ou la deuxième cuve de mélange (120, 220).
